# EUROPÄISCHE PATENTSCHRIFT

(11) **EP 3 263 274 B1**
(45) Veröffentlichungstag und Bekanntmachung des Hinweises auf die Patenterteilung: **12.01.2022**
(21) Anmeldenummer: 17000673.8
(22) Anmeldetag: 20.04.2017
(51) Int. Cl.: B23Q 1/00, B23B 31/107

(54) **SPANNEINRICHTUNG SOWIE SPANNSYSTEM**
CLAMPING DEVICE AND CLAMPING SYSTEM
DISPOSITIF DE SERRAGE ET SYSTÈME DE SERRAGE

(30) Priorität: 30.06.2016 CH 8292016
(43) Veröffentlichungstag der Anmeldung: 03.01.2018
(73) Patentinhaber: Erowa AG, 5734 Reinach (CH)
(72) Erfinder: Hediger, Hans, CH - 5734 Reinach (CH)
(74) Vertreter: Hering, Hartmut

(56) Entgegenhaltungen:
- EP-A1- 0 111 092
- EP-A1- 0 694 364
- EP-A1- 1 595 641
- EP-A1- 2 052 808
- EP-A2- 0 267 352
- EP-A2- 0 624 428
- DE-A1-102008 045 620
- DE-U1- 29 802 835

## Beschreibung

Die vorliegende Erfindung bezieht sich auf eine gemäss dem Oberbegriff des Anspruchs 1 ausgebildete Spanneinrichtung sowie ein Spannsystem mit einer solchen Spanneinrichtung.

Eine derartige Spanneinrichtung ist zum Beispiel aus der EP 2 052 808 A1 bekannt.

Spanneinrichtungen der hier zur Rede stehenden Art dienen dem positionsdefinierten Festspannen von Spannelementen in einem Spannfutter. Dabei wird das jeweilige Spannfutter üblicherweise fest auf dem Maschinentisch einer Bearbeitungsmaschine montiert, während das Spannelement bzw. die Spannelemente im Allgemeinen an Werkstückträgern -Paletten- angeordnet werden.

Aus der EP 0 614 725 A2 ist eine gattungsgemässe Einrichtung zum positionsdefinierten Festspannen eines Werkstücks am Arbeitsplatz einer Bearbeitungsmaschine bekannt. Die Einrichtung besteht aus einem am Arbeitsplatz der Bearbeitungsmaschine zu fixierenden Untersatz und einem auf den Untersatz aufsetzbaren und daran festspannbaren Werkstückträger. Der Werkstückträger weist vier Spannzapfen auf, mittels welchen er in vier am Untersatz korrespondierend angeordneten Spannvorrichtungen festgespannt werden kann. Zum Positionieren des Werkstückträgers am Untersatz ist letzterer mit ersten Richtelementen in Form von Zentrierlinealen versehen, während der Werkstückträger weitere Richtelemente in der Form von profilierten Platten aufweist, welche mit einer Nut versehen sind. Beim Fixieren des Werkstückträgers am Untersatz greifen die genannten Zentrierlineale in die Nuten der profilierten Platten ein und positionieren den Werkstückträger in X- und Y-Richtung wie auch bezüglich der Winkellage um die Z-Achse. Die Z-Positionierung erfolgt, indem der Werkstückträger mittels den Spannvorrichtungen gegen den Untersatz gezogen wird, bis dieser mit seiner planen Unterseite auf ringförmigen Auflageflächen des Untersatzes zur Anlage kommt. Obwohl sich eine derartige Spanneinrichtung in der Praxis bewährt hat, eignet sie sich nur bedingt zum Festspannen von grossen bis sehr grossen Werkstückträgern, da mit der Grösse des jeweiligen Werkstückträgers auch dessen absolute Längenänderung, beispielsweise bedingt durch thermische Einwirkungen, zunimmt. Dies ist beispielsweise darum problematisch, da der Werkstückträger oft nicht aus dem gleichen Material gefertigt ist, wie der Maschinentisch, auf dem die Spannfutter angeordnet sind. Somit ergeben sich unterschiedliche Wärmeausdehnungskoeffizienten zwischen dem Spannunterteil, namentlich dem Maschinentisch mit den darauf befestigten Spannfuttern, und dem Spannoberteil, namentlich dem Werkstückträger mit daran angeordneten Spannelementen. Unabhängig davon ist es auch problematisch, bei grossen Werkstückträgern, bei denen einzelne Spannelemente durchaus einen Meter oder mehr auseinander liegen können, diese derart genau an dem Werkstückträger zu befestigen, dass deren Abstand exakt auf den Abstand zwischen den zugehörigen Spannfuttern abgestimmt ist. Dies ist natürlich insbesondere bei runden Spannelementen problematisch.

Um grosse Werkstückträger positionsgenau festspannen zu können, werden im Allgemeinen mehrere Spannfutter verwendet, wobei der Werkstückträger mit einer entsprechenden Anzahl Spannelementen versehen wird. Bei der Verwendung von mehreren mit Zentrierelementen versehenen Spannfuttern kann ein Problem darin bestehen, dass eine Überbestimmung beim Festspannen des Werkstückträgers in der X-Y-Ebene entsteht.

Um eine solche Überbestimmung zu vermeiden, ist aus der EP 0 403 428 A2 eine Vorrichtung zum positionsdefinierten Aufspannen eines Werkstücks bekannt. Diese Vorrichtung weist zumindest zwei mit Zentrierzapfen versehene Spannfutter und eine entsprechende Anzahl von mit Spannzapfen versehenen und daran festspannbaren Oberteilen auf. Die Oberteile sind an einer Werkstückaufnahme angeordnet. Das jeweilige Oberteil ist mit zu den Zentrierzapfen korrespondierenden Zentrierschlitzen versehen. Zudem weist jedes Oberteil einen runden Spannzapfen -Zugbolzen- auf, der in einer zentralen Aufnahme des jeweiligen Spannfutters mittels Spannkugeln festspannbar ist. Während jedes Spannfutter mit vier Zentrierzapfen versehen ist, ist nur das eine Oberteil mit vier korrespondierenden Zentrierschlitzen versehen. Das andere Oberteil bzw. die anderen Oberteile ist/sind nur mit zwei Zentrierschlitzen versehen. Somit soll mit dem einen Oberteil die Lage der Werkstückaufnahme in X- und Y-Richtung festgelegt werden, während mit dem anderen Oberteil bzw. den anderen Oberteilen nur die Winkellage um die Z-Achse festgelegt werden soll.

Obwohl sich eine derartige Vorrichtung in der Praxis bewährt hat, ist deren Aufbau relativ komplex und eignet sich nur bedingt zum wiederholbar genauen Festspannen von grossen und schweren Werkstückträgern, zumal der jeweilige runde Spannzapfen in Bezug auf die zentrale und ebenfalls runde Aufnahme des jeweiligen Spannfutters sehr genau positioniert sein muss. Zudem können mit einer derartigen Vorrichtung nicht sehr hohe Haltekräfte generiert werden.

Die EP 0 694 364 A offenbart eine konventionelle Spannvorrichtung, die aus einem an einer Werkzeugmaschine befestigten ersten Kupplungsteil 1 und einem zweiten Kupplungsteil 15 besteht. Von der ebenen Kupplungsfläche 3 des ersten Kupplungsteils stehen vier Füsse 2, 4, 6, 8 sowie vier Zentrierzapfen 5, 7, 9, 11 vor. In der Mitte der Kupplungsfläche 3 ist eine Öffnung 10 für den Durchtritt eines nicht dargestellten Zugankers vorgesehen. Das zweite Kupplungsteil 15 dient als Werkstückträger und besitzt vier Oberflächenabschnitte 22, 24, 26, 28 an denen die Füsse 2, 4, 6, 8 des ersten Kupplungsteils 1 zur Anlage kommen. Zudem ist das zweite Kupplungsteil 15 mit vier Zentriernuten 21, 25 versehen. An den zu den Nuten weisenden Endabschnitten sind elastische nachgiebige Lippen 36, 38 vorgesehen, welche durch Einschnitte gebildet sind. Beim Festspannen des ersten am zweiten Kupplungsteil kommen die Zentrierzapfen 5, 7, 9, 11 an den Lippen zur Anlage und richten das zweite Kupplungsteil 15 aus. Die Maschine ist mit einer Vorrichtung zum Einziehen des Zugankers, welcher an dem zweiten Kupplungsteil 15 befestigt wird, versehen. Die in der Mitte der Kupplungsfläche 3 des ersten Kupplungselements angeordnete Öffnung 10 bildet dazu eine Aufnahmeöffnung für ein Spannelement, mittels welchem der Zuganker in der Öffnung 10 festspannbar ist.

Aus der EP 0 267 352 A2 ist eine Spannvorrichtung zur Festlegung eins Werkstücks oder Werkzeugs bekannt. Die Vorrichtung umfasst einen an der Werkzeugmaschine befestigten ersten Kupplungsteil und einen zweiten Kupplungsteil -Träger- für ein Werkstück. De beiden Kupplungsteile sind mit paarweise miteinander zusammenwirkenden Kupplungsorganen versehen. An dem ersten Kupplungsteil sind dazu lagerbockähnlichen Aufnahmeeinrichtungen angeordnet, während der Träger starre Profilstücke aufweist, die zum Positionieren in Nuten der Aufnahmeeinrichtungen eintauchen. Zum Festspannen des Trägers an dem ersten Kupplungsteil sind gemäss einem Ausführungsbeispiel klammerartige, an einer Schrägfläche einer Hinterschneidung angreifende Vorsprünge vorgesehen.

Die DE 10 2008 045620 A1 beschreibt eine Spanneinrichtung, mit einem Spannfutter und einem lösbar daran fixierbaren Spannteil in der Form eines Werkstückträgers. Das Spannfutter ist mit vier entlang einer Kreislinie angeordneten Zentrierzapfen versehen, während der Werkstückträger mit vier korrespondierend dazu angeordneten Zentriernuten versehen ist. Zum Festspannen des Werkstückträgers wird an diesem ein Spannzapfen befestigt, der in eine zentrale, am Spannfutter angeordnete Öffnung eingeführt und darin mittels eines Spannmechanismus festgespannt wird.

Aus der EP 0 624 428 A2 ist eine weitere Spanneinrichtung bekannt. Diese umfasst einen Untersatz und einen daran festspannbaren Werkstückträger. Der Werkstückträger ist mit ersten Zentrierelementen in der Form von drei keilförmigen Zentrierlinealen versehen, während am Untersatz drei Zentriernuten angeordnet sind. Ein Zentrierlineal bildet zusammen mit einer Zentriernut ein Richtelementpaar. Diese Richtelementpaare dienen der Ausrichtung des Werkstückträgers in drei zueinander senkrechten Koordinatenachsen X, Y und Z. Zum Festspannen des Werkstückträgers am Untersatz ist letzterer mit Spannorganen in der Form von zwei schwenkbaren Zughaken versehen, welche in je eine am Werkstückträger angeordnete Öffnung eingreifen.

Schliesslich geht aus der EP 1 595 641 A1 eine Spanneinrichtung mit einem Spannfutter und einer lösbar daran festspannbaren Palette hervor. Das Spannfutter ist mit vier um jeweils 90° zueinander versetzten Zentriernuten versehen, während die Palette vier korrespondierend dazu angeordnete Zentrierzapfen aufweist. Die eine Flanke der Zentriernut dient der Zentrierung des Zentrierzapfens, während die andere Flanke der Zentriernut durch ein Spannelement gebildet wird, mittels welchem der jeweilige Zentrierzapfen in der Nut festspannbar ist.

Aufgabe der Erfindung ist es, eine dem eingangs genannten technischen Gebiet zugehörende Spanneinrichtung zu schaffen, welche einfach aufgebaut ist und einerseits hohe Spann- bzw. Haltekräfte generiert und anderseits zumindest in einer Richtung, namentlich in X- oder Y-Richtung, Toleranzen in Bezug auf die Positionierung oder Anordnung des zugehöriges Spannelements aufnehmen bzw. ausgleichen kann, wobei sich die Spanneinrichtung auch als Modul zum Aufbauen eines Spannsystems eignen soll.

Die Lösung der Aufgabe ist durch die Merkmale des Anspruchs 1 definiert. Gemäss der Erfindung ist die Spanneinrichtung mit einem Spannfutter und einem daran festspannbaren Spannelement versehen, wobei das Spannfutter eine Aufnahmeöffnung für das Spannelement und am Spannelement angreifende Spannorgane zum Festspannen des Spannelements in der Aufnahmeöffnung aufweist, und wobei das Spannelement länglich ausgebildet ist und die zur Aufnahme des Spannelements (2) im Spannfutter (1) vorgesehene Aufnahmeöffnung (7) länglich, schlitzförmig ausgebildet ist, und wobei im Einführbereich der Aufnahmeöffnung zumindest ein federelastisch nachgiebiges Zentrierelement am Spannfutter angeordnet ist, welches dazu ausgebildet ist das Spannelement beim Einführen in die Aufnahmeöffnung quer zur Längsachse der Aufnahmeöffnung auszurichten.

Indem die Spanneinrichtung eine längliche, schlitzförmige Aufnahmeöffnung und ein länglich ausgebildetes Spannelement besitzt, wird einerseits die grundsätzliche Voraussetzung geschaffen, damit das Spannelement hohe Spann- bzw. Haltekräfte aufnehmen kann. Diese Ausbildung zusammen mit dem im Einführbereich der Aufnahmeöffnung angeordneten, federelastisch nachgiebigen Zentrierelement erlaubt, dass das Spannelement in Längsrichtung anderseits nicht exakt auf die Aufnahmeöffnung abgestimmt sein muss. Zudem ist eine solche Spanneinrichtung vergleichsweise einfach aufgebaut, zumal das jeweilige Spannelement sowohl eine Spannfunktion wie auch eine Zentrierfunktion übernimmt und somit separate Zentrierelemente entfallen können.

Bevorzugte Ausführungsformen und Weiterbildungen der Spanneinrichtung sind in den abhängigen Ansprüchen umschrieben.

So ist bei einer bevorzugten Weiterbildung vorgesehen, dass das jeweilige Zentrierelement mit einer länglichen Zentrieröffnung versehen ist, wobei sowohl die Aufnahmeöffnung des Spannfutters wie auch die Zentrieröffnung länger sind als das Spannelement. Dadurch wird ermöglicht, dass das Spannelement in Längsrichtung, d.h. in Richtung der Längsachse des Spannelements bzw. der Zentrieröffnung nicht exakt mittig eingeführt werden muss, sondern durchaus um einige Millimeter versetzt sein kann. Diese Ausbildung erlaubt, dass das jeweilige Spannfutter bei entsprechender Anordnung auf einem Spannuntersatz Längenänderungen des Werkstückträgers "kompensieren" kann.

Bei einer besonders bevorzugte Weiterbildung sind die Spannorgane als längliche Schieber ausgebildet, welche an einer Spannfläche des Spannelements angreifen. Dadurch können hohe Spann- und Haltekräfte auf das Spannelement übertragen werden.

Vorzugsweise ist das Spannfutter mit zwei parallel angeordneten Spannorganen versehen. Im Gegensatz zu Spannfuttern mit einer Vielzahl von Spannelementen wie beispielsweise Spannkugeln, sind solche Spannorgane einfach und kostengünstig in der Herstellung und auch deren Betätigung ist vergleichsweise einfach.

Eine bevorzugte Weiterbildung sieht vor, dass das jeweilige Spannorgan länger ist das Spannelement. Durch diese Ausbildung kann sichergestellt werden, dass sich das Spannorgan entlang der gesamten Länge des Spannelements anlegt und zwar auch dann, wenn das Spannelement in Längsrichtung nicht mittig sondern etwas versetzt in die Aufnahmeöffnung des Spannfutters eingeführt wird.

Eine weitere bevorzugte Weiterbildung sieht vor, dass das Zentrierelement eine einstückig ausgebildete Federscheibe aus rostbeständigem Stahl ist, wobei die Federscheibe im Einführbereich der Aufnahmeöffnung des Spannfutters angeordnet ist, und wobei die Zentrieröffnung in die Federscheibe eingelassen ist. Eine solche Federscheibe ist einerseits einfach und kostengünstig in der Herstellung und andererseits kann sie schnell und einfach an dem Spannfutter angebracht werden.

Bei einer weiteren, bevorzugten Weiterbildung wird vorgeschlagen, das Spannelement entlang seiner beiden Längsseiten mit je einer Spannfläche zu versehen, an der sich das jeweilige Spannorgan zum Einziehen und Festspannen des Spannelements kraft-und/oder formschlüssig anlegt. Auf diese Weise kann eine grosse Spannfläche realisiert werden, welche hohe Kräfte aufnehmen und übertragen kann.

Besonders bevorzugt ist das Spannelement entlang seiner beiden Längsseiten mit je einer konisch zulaufenden Zentrierfläche und je einer Spannfläche versehen, wobei die Spannflächen in Einschubrichtung gesehen vor den Zentrierflächen angeordnet sind, und wobei die Spannorgane als längliche Schieber ausgebildet sind, welche an der jeweiligen Spannfläche des Spannelements anzugreifen bestimmt sind. Ein solches Spannelement ist einfach zu fertigen und ermöglicht hohe Spannkräfte, wobei es gleichzeitig auch eine Zentrierfunktion übernimmt.

Vorzugsweise weist das Spannfutter pro Spannorgan zumindest einen linear verschiebbaren, in einem Kolbengehäuse aufgenommenen Betätigungskolben auf, der mechanisch mit dem jeweiligen Spannorgan verbunden ist. Ein solcher Kolben ermöglicht ein zuverlässiges Verschieben des zugeordneten Spannorgans. Zudem ist er einfach und kostengünstig realisierbar.

Besonders bevorzugt ist der jeweilige Betätigungskolben und/oder das jeweilige Spannorgan mittels Druckfedern in Richtung der Aufnahmeöffnung belastet, wobei der jeweilige Betätigungskolben pneumatisch entgegen der Kraft der Federn verschiebbar ist. Durch diese Ausbildung kann sich die Spannvorrichtung selbsttätig mechanisch verriegeln und die Spannkraft bleibt auch im energiefreien Zustand erhalten. Ein pneumatisches Öffnen des Spannfutters ist zudem einfach realisierbar.

Eine bevorzugte Weiterbildung sieht zudem vor, dass das Spannelement auf beiden Längsseiten mit je einer konisch zulaufenden Zentrierfläche versehen ist, wobei die jeweilige Zentrierfläche insbesondere zweistufig ausgebildet ist. Eine solche Zentrierfläche ist einfach zu realisieren; in der zweistufigen Ausführung wird zudem eine zweistufige Zentrierung in der Form einer Grob- und einer nachfolgenden Feinzentrierung ermöglicht.

Indem die Aufnahmeöffnung des Spannfutters durchgehend, sich über die gesamte Länge des Spannfutters erstreckend ist, wie dies bei einer bevorzugten Weiterbildung vorgesehen ist, kann das Spannfutter einfach gereinigt werden, wobei allfällige Schmutzpartikel seitlich aus der Aufnahmeöffnung austreten können. Zudem ist eine solche Ausbildung einfach und kostengünstig realisierbar. Schliesslich ist bei einer weiteren, bevorzugten Weiterbildung der Spanneinrichtung das Spannfutter auf der Oberseite mit erhöhten Auflageflächen versehen, welche sich auf beiden Seiten entlang der Aufnahmeöffnung erstrecken. Diese Ausbildung ermöglicht grossflächige Z-Auflagen für den Werkstückträger.

Eine weitere Ausführungsform der Erfindung besteht in einem Spannsystem, bei welchem erfindungsgemäss gestaltete Spanneinrichtungen in besonders vorteilhafter Weise angeordnet sind.

Ein solches Spannsystem ist durch die Merkmale des Anspruchs 14 definiert.

Bevorzugte Weiterbildungen des Spannsytems sind in den weiteren abhängigen Ansprüchen 15-18 definiert.

So wird bei einer bevorzugten Weiterbildung vorgeschlagen, dass auf dem Spannuntersatz vier um jeweils 90° zueinander versetzte Spannfutter angeordnet sind, wobei der Werkstückträger mit vier Spannelementen zum Festspannen des Werkstückträgers am Spannuntersatz versehen ist, und wobei zwei Spannfutter im Einführbereich der Aufnahmeöffnung mit je einem Zentrierelement zum Ausrichten des Werkstückträgers in einer ersten Richtung versehen sind und die beiden anderen Spannfutter im Einführbereich der Aufnahmeöffnung mit je einem Zentrierelement zum Ausrichten des Werkstückträgers in einer quer zur ersten Richtung verlaufenden zweiten Richtung versehen sind. Ein solches Spannsystem eignet sich insbesondere zum wiederholbar genauen Festspannen von mittelgrossen Werkstückträgern.

Bei einer weiteren, bevorzugten Weiterbildung wird vorgeschlagen, dass auf dem Spannuntersatz zumindest vier Spannfutter angeordnet sind, wobei zumindest zwei Spannfutter in einer Richtung miteinander fluchten und wobei zumindest ein weiteres Spannfutter um 90° zu den beiden miteinander fluchtenden Spannfuttern auf dem Spannuntersatz angeordnet ist. Ein solches Spannsystem bildet die Basis zum wiederholbar genauen Festspannen von mittelgrossen bis grossen oder sehr grossen Werkstückträgern.

Eine weitere bevorzugte Weiterbildung sieht vor, dass auf dem Spannuntersatz zumindest vier Spannfutter angeordnet sind, wobei zumindest zwei Spannfutter in einer ersten Richtung miteinander fluchten und wobei zumindest zwei weitere Spannfutter in einer jeweiligen Spannelements in einer ersten Richtung versehen sind und wobei die beiden in der zweiten Richtung miteinander fluchtenden Spannfutter mit je einer Zentrierscheibe zum Ausrichten des Spannelements in einer zu der ersten Richtung um 90° versetzten zweiten Richtung versehen sind. Bei einer solchen Ausbildung verläuft der Spannsystem Nullpunkt durch den Schnittpunkt zweier Geraden, welche jeweils die beiden miteinander fluchtenden Spannfutter verbinden.

Bei einer weiteren bevorzugten Weiterbildung wird vorgeschlagen, dass auf dem Spannuntersatz drei, vier, fünf oder sechs Spannfutter entlang einer Kreislinie verteilt angeordnet sind. Eine derartige Anordnung eignet sich insbesondere für runde Werkstückträger, welche insbesondere der Aufnahme von runden Werkstücken dienen. Besonders bevorzugt ist sowohl die Aufnahmeöffnung des Spannfutters wie auch die in das Zentrierelement eingelassene Zentrieröffnung länger als das jeweilige Spannelement. Eine solche Ausbildung ist insbesondere unempfindlich in Bezug auf mögliche Längenänderungen des Werkstückträgers in Bezug auf den Spannuntersatz.

Eine weitere bevorzugte Weiterbildung des Spannsystems sieht vor, dass jedes Spannfutter zwei parallel angeordnete, als längliche Schieber ausgebildete Spannorgane aufweist, welche an einer Spannfläche des jeweiligen Spannelements anzugreifen bestimmt sind. Solche Schieber sind einfach und kostengünstig in der Herstellung.

Ausserdem können sie hohe Spann- und Haltekräfte auf das Spannelement übertragen. Aus der nachfolgenden Detailbeschreibung und der Gesamtheit der Patentansprüche ergeben sich weitere vorteilhafte Ausführungsformen und Merkmalskombinationen der Erfindung.

Kurze Beschreibung der Zeichnungen.

Die Figuren der zur Erläuterung eines Ausführungsbeispiels verwendeten Zeichnungen zeigen:
- Fig. 1: die aus einem Spannfutter und einem Spannelement bestehende Spanneinrichtung in perspektivischer Darstellung;
- Fig. 2: die Spanneinrichtung gemäss Fig. 1 in einem Schnitt, wobei das an einem Werkstückträger befestigte Spannelement beabstandet von dem Spannfutter dargestellt ist;
- Fig. 3: die Spanneinrichtung gemäss Fig. 2, wobei der Werkstückträger lose auf das Spannfutter aufgesetzt ist;
- Fig. 4: die Spanneinrichtung gemäss Fig. 2 während des Festspannens des Werkstückträgers an dem Spannfutter;
- Fig. 5: das Spannfutter zusammen mit dem in der Aufnahmeöffnung aufgenommenen Spannelement;
- Fig. 6: die eine Spannfutterhälfte in einer Ansicht von der Innenseite zusammen mit dem Werkstückträger und dem daran angeordneten Spannelement;
- Fig. 7: eine perspektivische Ansicht eines Spannsystems mit einem Spannuntersatz und einem Spannoberteil;
- Fig. 8: einen Spannuntersatz, welcher sich zum Festspannen von grossen bis sehr grossen Werkstückträgern eignet;
- Fig. 9: ein alternatives Ausführungsbeispiel eines Spannfutters in einem Schnitt;

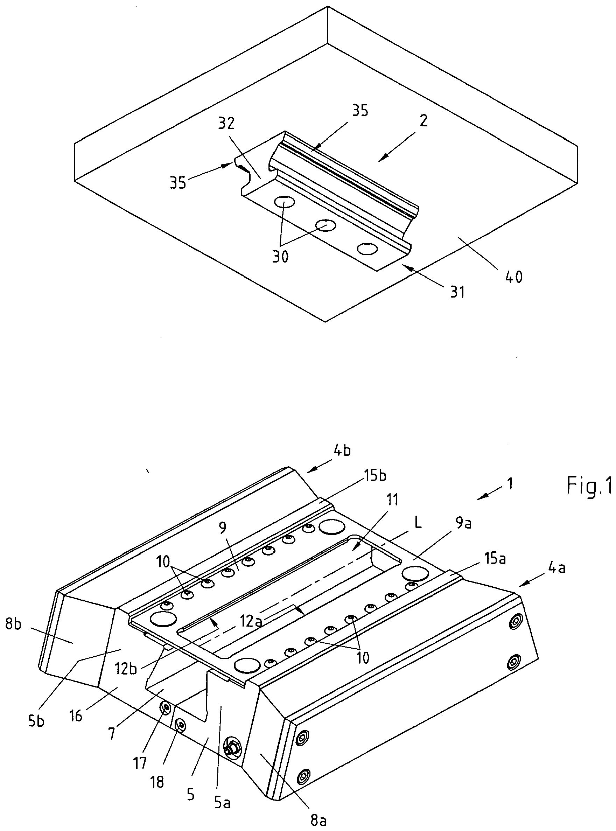

Die Fig. 1 zeigt die beiden wesentlichen Elemente der Spanneinrichtung in perspektivischer Ansicht. Die Spanneinrichtung umfasst ein Spannfutter 1 sowie ein im Spannfutter 1 festspannbares Spannelement 2. Das Spannfutter 1 wird üblicherweise auf dem Bearbeitungstisch einer Bearbeitungsmaschine fixiert, während das Spannelement 2 auf der Unterseite eines Werkstückträgers -Palette- befestigt wird. Das Spannfutter 1 ist in einer Ansicht von oben und das Spannelement 2 zusammen mit dem andeutungsweise eingezeichneten Werkstückträger 40 in einer Ansicht von unten dargestellt. Zum Festspannen des Spannelements 2 in der Aufnahmeöffnung 7 ist das Spannfutter 1 mit zwei länglichen Spannorganen versehen, welche aus dieser Darstellung jedoch nicht ersichtlich sind.

Das Spannfutter 1 wird durch zwei im Wesentlichen identische Spannfutterhälften 4a, 4b gebildet. Jede Spannfutterhälfte 4a, 4b ist mit einem Gehäuse 5a, 5b versehen wobei die beiden Gehäuse 5a, 5b im Bereich ihres Bodens zu einem gesamthaft mit 5 bezeichneten Gehäuse verschraubt sind. Jede Spannfutterhälfte 4a, 4b weist zudem ein Kolbengehäuse 8a, 8b auf, in dessen Innenraum je ein Kolben (nicht ersichtlich) angeordnet ist.

Das Spannfutter 1 ist mit einer länglichen, schlitzförmigen Aufnahmeöffnung 7 für das länglich ausgebildete Spannelement 2 versehen. Im Einführbereich der Aufnahmeöffnung 7 ist ein Zentrierelement 9 in der Form einer in Z-Richtung federelastisch nachgiebigen Scheibe 9a am Spannfutter 1 angeordnet. Als Z-Richtung wird diejenige Richtung bezeichnet, welche im Normalfall vertikal, d.h. senkrecht zur Oberfläche des Bearbeitungstisches verläuft, während die X- und Y-Richtungen parallel zur Oberfläche des Bearbeitungstisches verlaufen, auf dem ein solches Spannfutter 1 festgespannt wird. Die Zentrierscheibe 9a ist mittels Schrauben 10 an dem Gehäuse 5 bzw. den beiden Gehäuseteilen 5a, 5b des Spannfutters 1 befestigt. Die Zentrierscheibe 9 wirkt gleichzeitig als Verstärkung für die beiden Gehäuseteile 5a, 5b. In die Zentrierscheibe 9a ist eine längliche, im Wesentlichen rechteckig ausgebildete Zentrieröffnung 11 eingelassen. Durch diese Zentrieröffnung 11 werden entlang der Längsseite der Zentrierscheibe zwei parallel zueinander verlaufende Seitenwände 12a, 12b gebildet, welche derart auf das jeweilige Spannelement 2 abgestimmt sind, dass das Spannelement 2 beim Einführen in die Aufnahmeöffnung 7 quer zur Längsachse L der Aufnahmeöffnung 7 ausgerichtet wird. Diese beiden Seitenwände 12a, 12b bilden eine Art Zungen, welche in Z-Richtung federelastisch nachgiebig sind. Je nach Anordnung des Spannfutters 1 wird das Spannelement 2 beim Einführen in die Aufnahmeöffnung 7 in X- oder Y-Richtung ausgerichtet. Jedenfalls wird das Spannelement 2 bei Einführen an den beiden Seitenwänden 12a, 12b quer zur Längsachse L der Aufnahmeöffnung 7 bzw. des Spannfutter 1 ausgerichtet. Das Spannelement 2 ist dazu im hinteren bzw. oberen Bereich mit konisch zulaufenden Seitenflächen versehen, wie nachfolgend noch erläutert wird. Das Spannelement 2 legt sich beim Einführen in das Spannfutter 1 linienförmig an der Zentrierscheibe 9a an, was beispielsweise im Hinblick auf eine Schmutzunempfindlichkeit Vorteile mit sich bringt, da sie wie Schmutzabstreifer wirken.

Auf beiden Seiten der Zentrierscheibe 9a ist das Spannfutter 1 mit länglichen, erhöhten Auflageflächen 15a, 15b versehen, welche die Z-Auflage für den Werkstückträger beim Festspannen am Spannfutter 1 bilden. Diese Auflageflächen 15a, 15b verlaufen parallel zur Längsachse L der Aufnahmeöffnung 7. In die Stirnseite 16 des Spannfutters 1 münden im Bodenbereich zwei Kanäle 17, 18, über welche Druckluft eingeleitet werden kann. Der eine Kanal 17 dient dabei dem Öffnen des Spannfutters, während der andere Kanal 18 zum Nachspannen der Spannorgane vorgesehen ist. Die beiden Kanäle 17, 18 verlaufen einerseits durch das Spannfutter 1 hindurch bis auf dessen andere Stirnseite. Andererseits ist der jeweilige Kanal mit beiden Spannfutterhälften 4a, 4b verbunden. Jedenfalls weist jede Futterhälfte 4a, 4b auf jeder Stirnseite einen Kanal zum Anschliessen an eine Druckluftleitung auf. Diese Ausbildung ermöglicht gleichzeitig eine Serienschaltung von mehreren Spannfuttern.

Das Spannelement 2 ist in der Form eines länglichen Balkens ausgebildet, der im Querschnitt einer Bahnschiene ähnelt. Das Spannelement 2 kann einerseits in dem Spannfutter 1 festgespannt werden; gleichzeitig übernimmt es auch eine Zentrierfunktion indem es neben Spannflächen auch Zentrierflächen aufweist, mittels welchen es beim Einführen in das Spannfutter 1 quer zur Längsachse L der Aufnahmeöffnung 7 ausgerichtet wird. Das Spannelement 2 weist eine plane Rückseite auf, welche beim Festschrauben flächig auf der Unterseite des Werkstückträgers 40 zur Anlage kommt. Das Spannelement 2 ist mit Bohrungen 30 zur Aufnahme von Befestigungsschrauben versehen. Auf der dem Spannfutter 1 zuzuwenden Vorderseite ist das Spannelement 2 T-förmig ausgebildet, so dass ein Kopfteil in der Form eines Vorsprungs 32 gebildet wird. Im Bereich der Rückseite ist das Spannelement 2 auf jeder Längsseite mit einer Zentrierfläche 35 versehen. Die jeweilige Zentrierfläche 35 ist vorzugsweise 2-stufig ausgebildet. Der Werkstückträger 40 kommt beim Festspannen des Spannelements 2 mit seiner planen Unterseite auf den Auflageflächen 15a, 15b zur Anlage.

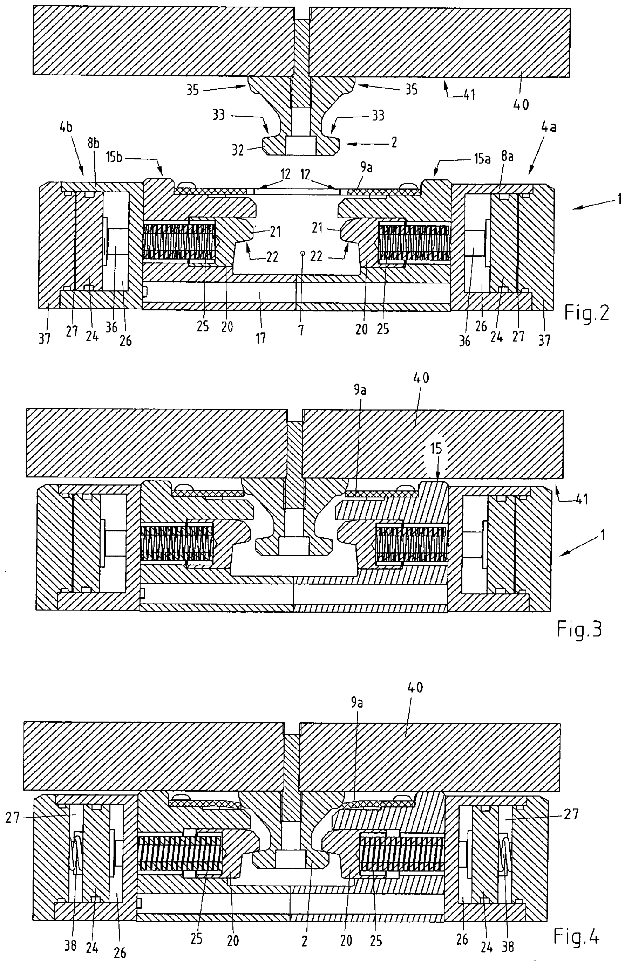

Anhand der Figuren 2 bis 4, welche das Spannfutter 1 zusammen mit dem an einem Werkstückträger 40 fixierten Spannelement 2 im Schnitt zeigen, wird insbesondere die Ausbildung des Spannfutters 1 sowie dessen Funktionsweise beim Festspannen des Spannelements 2 näher erläutert. Das Spannelement 2 ist mittels mehrerer Schrauben auf der Unterseite des schematisch dargestellten Werkstückträgers 40 befestigt.

Während die Fig. 2 das Spannfutter 1 im geöffneten Zustand zusammen mit dem noch nicht aufgesetzten bzw. aufgespannten Werkstückträger 40 zeigt, ist in der Figur 3 das Spannfutter 1 im geöffneten Zustand zusammen mit dem lose darauf aufgesetzten Werkstückträger gezeigt. In der Fig. 4 ist das Spannfutter in einer Momentaufnahme beim Festspannen des Werkstückträgers dargestellt. Da das Spannfutter 1 aus zwei im Wesentlichen gleich ausgebildeten Spannfutterhälften 4a, 4b besteht, welche hier spiegelbildlich dargestellt sind, sind jeweils die Elemente der einen Spannfutterhälfte 4a mit identischen Bezugszeichen wie die entsprechenden Elemente der anderen Spannfutterhälfte 4b versehen.

Wie in der Figur 2 erkennbar ist, sind im Innern des Spannfutters 1 zwei Spannorgane 20 in der Form von Schiebern angeordnet. Die beiden Spannorgane 20 liegen einander gegenüber, sind länglich ausgebildet und parallel zueinander angeordnet. Die Spannorgane 20 sind einstückig ausgebildet und sehr robust gestaltet. Vorzugsweise bestehen die beiden Spannorgane 20 aus nitriertem Stahl. Jedes Spannorgan 20 ist mittels mehrerer Druckfedern 25 in Richtung der Aufnahmeöffnung 7 belastet, wobei aus dieser Darstellung nur je eine Druckfeder 25 pro Spannorgan 20 ersichtlich ist. Die Druckfedern 25 sind auf der Rückseite am Kolbengehäuse 8a, 8b abgestützt. Das jeweilige Spannorgan 20 ist mit einem Fortsatz 21 versehen, dessen Unterseite eine Spannfläche 22 aufweist, mittels welcher das Spannorgan 20 an einer Spannfläche 33 auf der Rückseite des Vorsprungs 32 des Spannelements 2 angreifen kann, um das Spannelement 2 einzuziehen und zusammen mit dem Werkstückträger 40 an dem Spannfutter 1 festzuspannen. Das Spannelement 2 ist entlang seiner beiden Längsseiten mit einer solchen Spannfläche 33 versehen. Die beiden Spannflächen 33 werden durch je eine Hinterschneidung im Spannelement 2 gebildet. Die am Fortsatz 21 angeordnete Spannfläche 22 des jeweiligen Spannorgans 20 ist derart auf die Spannfläche 33 des Spannelements 2 abgestimmt, dass das Spannelement 2 durch die beiden Spannorgane 20 mit einer hohen Kraft nach unten bzw. in das Spannfutter 1 hineingezogen wird. Indem das jeweilige Spannorgan 20 in der Form eines länglichen Schiebers ausgebildet ist, kann sich dieses entlang der gesamten Länge des Spannelements 2 grossflächig an diesem anlegen und den Werkstückträger 40 mit einer hohen Kraft an dem Spannfutter 1 festspannen, so dass das Spannelement 2 und damit auch der Werkstückträger 40 grosse Kräfte, insbesondere auch hohe Querkräfte aufnehmen kann/können. Des Weiteren ist ein im Bodenbereich in das Gehäuse 5 eingelassener Kanal 17 ersichtlich, dessen Funktion anschliessend noch erläutert wird. Anstelle von insgesamt zwei Spannorganen könnten pro Seite beispielsweise auch zwei oder drei Spannorgane vorgesehen werden, so dass insgesamt vier oder sechs Spannorgane vorhanden wären, wobei diese Anzahl keinesfalls als abschliessend zu betrachten ist.

Das jeweilige Spannorgan 20 ist über Druckstangen 36 mit einem auf gleicher Ebene angeordneten Kolben 24 verbunden. Der jeweilige Kolben 24 ist lateral verschiebbar im Innern des zugehörigen Kolbengehäuses 8a, 8b angeordnet. Indem der jeweilige Kolben 24 horizontal auf einer Ebene mit dem zugehörigen Spannorgan 20 angeordnet ist, kann die Kraft vom Kolben 24 direkt, d.h. ohne Umlenkung, auf das jeweilige Spannorgan 20 übertragen werden. Zudem ermöglicht diese Ausbildung eine kompakte Bauweise mit geringer Aufbauhöhe des gesamten Spannfutters 1. Die beiden Kolben 24 bewegen die zugehörigen Spannorgane 20 unabhängig voneinander, was u.a. den Vorteil mit sich bringt, dass das Spannelement 2 in Querrichtung nicht exakt mittig in das Spannfutter eingesetzt werden muss. Dies ist insbesondere bei grossen Spannsystemen mit mehreren Spannfuttern ein Vorteil, wie nachfolgend noch erläutert wird.

Der Raum 26 zwischen der Vorderseite des jeweiligen Kolbens 24 und der Grundfläche des Kolbengehäuses 8a, 8b wird als Druckraum bezeichnet, während der Raum 27 zwischen der Rückseite des Kolbens 24 und einer seitlichen Gehäuseabdeckung 37 als Nachspannraum bezeichnet wird. Sowohl der Druckraum 26 wie auch der Nachspannraum 27 können über interne Kanäle (nicht ersichtlich) mit Überdruck beaufschlagt werden. Des Weiteren ist ein Kabelkanal 17 ersichtlich, der sich beispielsweise zur Aufnahme von Sensorleitungen o.ä. eignet.

Die Druckfedern 25 sind derart ausgebildet und angeordnet, dass sie den jeweiligen Kolben 24, und damit auch die beiden Spannorgane 20, in Richtung der Aufnahmeöffnung 7 belasten, so dass das Spannelement 2 durch die Kraft der Federn 25 im Spannfutter 1 festgespannt wird bzw. festgespannt bleibt. Um den jeweiligen Kolben 24 zusammen mit dem mechanisch gekoppelten Spannorgan 20 in die hier dargestellte, zurückgeschobene Position zu bringen, muss der jeweilige Druckraum 26 pneumatisch beaufschlagt werden. Dazu muss ein so hoher Druck in dem Druckraum 26 erzeugt werden, dass die Kraft der auf das jeweilige Spannorgan 20 einwirkenden Druckfedern, sowie allfälliger weiterer Druckfedern, mitsamt den Reibungswiderständen überwunden werden.

Es versteht sich, dass sich die beiden Spannorgane 20 in der zurückgeschobenen Position befinden müssen, damit das Spannelement 2 in das Spannfutter 1 eingeführt und darin festgespannt werden kann.

Beim Einführen des Spannelements 2 in die Aufnahmeöffnung 7 des Spannfutters 1 wird zuerst der Spannelement-Vorderteil mit seinen beiden Spannflächen 33 in die Aufnahmeöffnung 7 eingeführt. Am Ende des Einführvorgangs kommen dann die Zentrierflächen 35 des Spannelements 2 an der Zentrierscheibe 9a zur Anlage. Jedenfalls sind die Spannflächen 33 des Spannelements 2 in Einschubrichtung gesehen vor den Zentrierflächen 35 angeordnet.

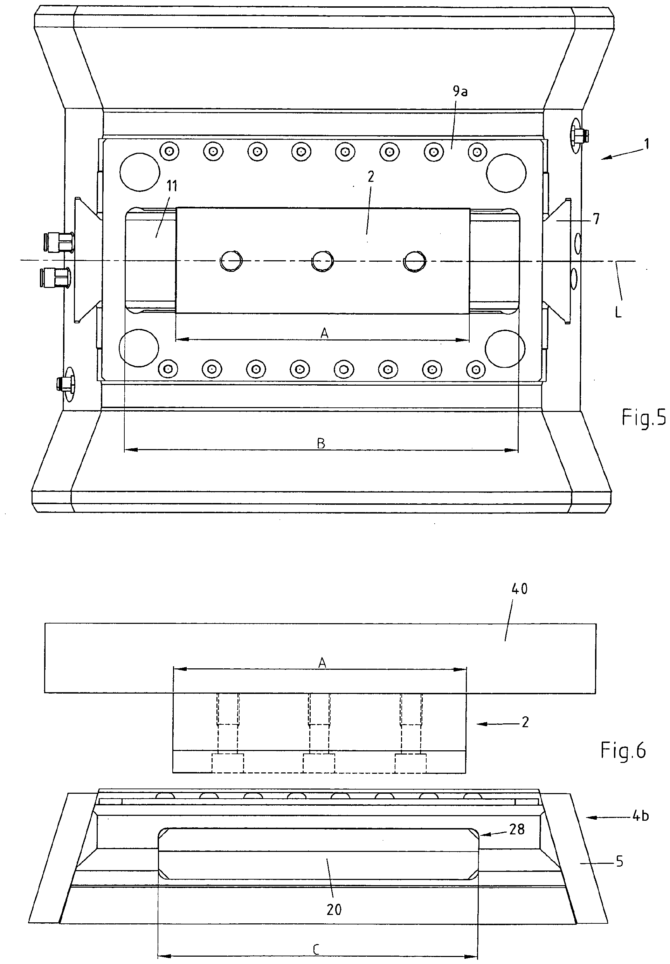

Fig. 3 zeigt das Spanfutter 1 zusammen mit dem lose aufliegenden Werkstückträger 40. Lose heisst in diesem Zusammenhang, dass der Werkstückträger 40 nur mit seinem Eigengewicht, natürlich inkl. allfällig darauf befestigten Werkstücken, auf dem Spannfutter 1 aufliegt. Beim Auflegen des Werkstückträgers 40 auf das Spannfutter 1 kommen die Zentrierflächen 35 des Spannelements 2 an der Zentrierscheibe 9a (Fig. 2) zur Anlage und richten dabei das Spannelement 2 quer zur Längsachse der Aufnahmeöffnung 7 aus. Jedenfalls sind die Zentrierflächen des Spannelements 2 derart dimensioniert und auf die Zentrierscheibe abgestimmt, dass das Spannelement beim Einführen in die Zentrieröffnung bzw. die Aufnahmeöffnung quer zu seiner Längsachse L (Fig. 5) bzw. quer zur Längsachse der Aufnahmeöffnung exakt ausgerichtet wird. Durch die zweistufige Ausbildung der am Spannelement angeordneten Zentrierflächen wird zuerst ein Grob- und danach eine Feinzentrierung vorgenommen.

Wie in der Fig. 3 dargestellt, kann bei leichten Werkstückträgern 40 nach dem losen Auflegen zwischen der planen Unterseite 41 des Werkstückträgers und der Oberfläche der Auflageflächen 15 ein kleiner Spalt verbleiben, da sich das jeweilige Spannelement 2 in Z-Richtung an der Zentrierscheibe 9a abstützt. Ob nach dem losen Auflegen ein solcher Spalt besteht, hängt natürlich insbesondere von der Geometrie der Zentrierflächen des Spannelements in Bezug auf die Zentrieröffnung der Zentrierscheibe sowie der Steifigkeit der Zentrierscheibe und dem Gesamtgewicht des Werkstückträgers ab. Die Zentrierscheibe weist vorzugsweise eine Dicke zwischen 2 und 5 Millimetern auf, so dass über die Zentrierscheibe 9a auch gewisse Querkräfte aufgenommen werden können.

Sofern nach dem losen Auflegen des Werkstückträgers zwischen dessen Unterseite 41 und den Auflageflächen 15 noch ein Spalt verbleibt, erfolgt die Positionierung des Werkstückträgers in Z-Richtung unter Ausnutzung der federelastischen Nachgiebigkeit der Zentrierscheibe. Dieser Spalt wird aufgehoben, wenn das Spannelement unter der Wirkung der Spannorgane weiter in das Spannfutter hineingezogen wird. Dabei verändert sich die Position des Spannelements quer zur Längsachse der Aufnahmeöffnung nicht mehr, da nach dem losen Auflegen des Werkstückträgers nur noch ein sehr kleine Bewegung des Werkstückträgers bzw. des Spannelements in Z-Richtung stattfindet. Üblicherweise bewegt sich der Werkstückträger 40 nach dem Ausrichten des Spannelements 2 noch um einige Zehntelmillimeter in Z-Richtung, bis er auf den erhöhten Flächenabschnitten 15 des Spannfutters 1 zur Anlage kommt. Das grundlegende Prinzip einer solchen Positionierung ist aus der EP 0 111 092 B2 bekannt.

Die Fig. 4 zeigt einen Schnitt durch das Spannfutter 1 zusammen mit dem Werkstückträger 40 und dem daran befestigten Spannelement 2 während des Festspannens des Werkstückträgers 40. Aus dieser Darstellung sind zudem Zusatzfedern 38 ersichtlich, welche zwischen der Rückseite des jeweiligen Kolbens 24 und der seitlichen Gehäuseabdeckung 37 eingespannt sind. Obwohl nur eine Zusatzfeder 38 pro Kolben 24 erkennbar ist, sind für jeden Kolben 24 mehrere solcher Federn 38 vorhanden. Diese Zusatzfedern 38 belasten den Kolben 24 in Richtung der Spannfutterinnenseite und erhöhen die Spannkraft des kraftschlüssig mit dem jeweiligen Kolben verbundenen Spannorgans 20 zusätzlich zu den bereits vorgängig erwähnten Druckfedern 25. Durch solche Zusatzfedern 38 kann die mechanische Spannkraft nachhaltig erhöht werden. Es versteht sich, dass beim pneumatischen Zurückschieben des jeweiligen Kolbens 24 auch die Kraft dieser Zusatzfedern 38 überwunden werden muss.

Damit sich die beiden Spannorgane 20 nach innen in die Wirk- bzw. Spannstellung verschieben können, wird der Druck in der Druckkammer 26 reduziert bzw. die Druckkammer 26 zur Atmosphäre hin geöffnet. Unter der Kraft der Druckfedern 25, 38 bewegen sich dann die beiden Kolben 24 zusammen mit den kraftschlüssig damit verbundenen Spannorganen 20 nach innen. Dabei legt sich die Spannfläche 22 des jeweiligen Spannorgans 20 an der korrespondierenden Spannfläche 33 des Spannelements 2 an (Fig. 2) und zieht dieses zusammen mit dem Werkstückträger 40 in Z-Richtung nach unten, bis der Werkstückträger 40 auf den erhöhten Flächenabschnitten des Spannfutters 1 zur Anlage kommt. Bei dieser Z-Positionierung wird die Zentrierscheibe 9a im Bereich der Zentrieröffnung in Richtung der Spannfutterinnenseite elastisch deformiert, wie dies andeutungsweise erkennbar ist. Unter der Kraft der Federn 25, 38 verriegelt sich eine solche Spannvorrichtung selbsttätig. Zudem bleibt die Spannkraft auch im energiefreien Zustand erhalten. Um im Bedarfsfall die Spann- bzw. Einzugskraft zu erhöhen, kann der Nachspannraum 27 pneumatisch mit Druck beaufschlagt werden.

Die Fig. 5 zeigt das Spannfutter 1 zusammen mit einem in der Aufnahmeöffnung 7 aufgenommenen Spannelement 2 in einer Ansicht von oben. In dieser Darstellung ist erkennbar, dass die in die Zentrierscheibe 9a eingelassene Zentrieröffnung 11 deutlich länger ist als das Spannelement 2. Die Länge des Spannelements 2 ist mit A bezeichnet, während die Länge der Zentrieröffnung 11 mit B bezeichnet ist. Des Weiteren ist erkennbar, dass sich die Aufnahmeöffnung 7 in Längsrichtung durch das gesamte Spannfutter 1 hindurch erstreckt und damit natürlich auch länger ist als das Spannelement 2. Vorzugsweise ist sowohl die Zentrieröffnung 11 wie auch die Aufnahmeöffnung 7 um zumindest 5% länger als das Spannelement 2, besonders bevorzugt um zumindest 10%, ganz besonders bevorzugt um zumindest 20%. Durch eine solche Gestaltung wird sichergestellt, dass das Spannelement 2 nicht zentral bzw. exakt in der Mitte in das Spannfutter 1 eingeführt werden muss, sondern dass dieses in Längsrichtung, d.h. in Richtung der Längsachse L des Spannelements 2 bzw. der Zentrieröffnung 11, durchaus um einige Millimeter oder gar um einige Zentimeter verschoben in die Zentrieröffnung 11 bzw. Aufnahmeöffnung 7 des Spannfutters 1 eingeführt werden kann, was insbesondere bei grossen Werkstückträgern bzw. Spannsystemen vorteilhaft ist, wie nachfolgend noch näher erläutert wird.

Fig. 6 zeigt in vereinfachter Darstellung die eine Spannfutterhälfte 4b in einer Ansicht von der Innenseite. Zudem ist der Werkstückträger 40 zusammen mit dem daran angeordneten und ebenfalls vereinfacht dargestellten Spannelement 2 erkennbar. Aus dieser Ansicht ist insbesondere das in einer Schieberöffnung 28 des Spannfuttergehäuses 5 aufgenommene Spannorgan 20 erkennbar. Die Länge des Spannelements 2 ist wiederum mit A bezeichnet, während die Länge des Spannorgans 20 mit C bezeichnet ist. Vorzugsweise ist das Spannorgan 20 etwas länger als das Spannelement 2. Dadurch kann sichergestellt werden, dass sich das Spannorgan 20 entlang des gesamten Spannelements 20 an dessen Spannfläche anlegt, was insofern wichtig ist, da das jeweilige Spannelement 20 in Längsrichtung durchaus nicht immer zentral in das Spannfutter 1 eingeführt wird, was insbesondere daher rühren kann, dass unterschiedliche Werkstückträger 40 mit solchen Spanfuttern festgespannt werden können.

Die in den Figuren 1 bis 6 dargestellte Spanneinrichtung bildet das Grundelement zur Bildung eines Spannsystems, mit welchem insbesondere grosse und/oder schwere Werkstücke bzw. Werkstückträger im Arbeitsbereich einer Bearbeitungsmaschine, beispielsweise einer Fräsmaschine, Schleifmaschine, Erodiermaschine oder einer Drehbank, festgespannt werden können. Unter dem Begriff grosse bzw. sehr grosse Werkstückträger werden Werkstückträger verstanden, welche in zumindest einer Richtung eine Breite bzw. Länge von ca. einem Meter und mehr aufweisen können, wobei diese durchaus auch bis zu zehn Metern gross sein können. Auf solchen Werkstückträgern können Werkstücke mit einem Gesamtgewicht von bis zu mehreren tausend Kilogramm befestigt werden. Jedenfalls bildet eine solche Spanneinrichtung einen modularen Baustein, mittels welchem grosse bis sehr grosse Spannsysteme realisiert werden können.

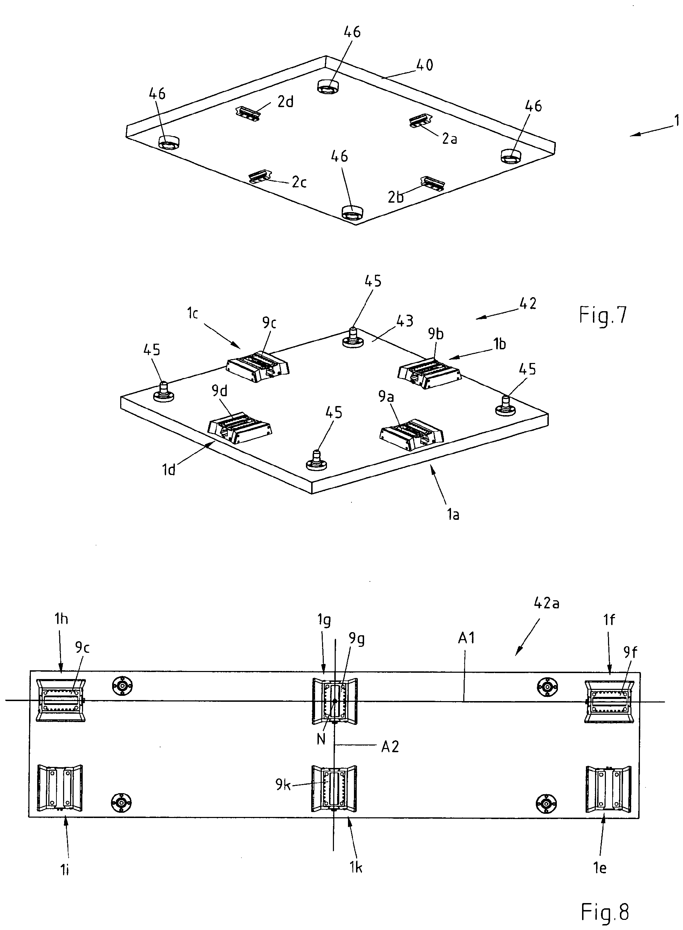

Die Fig. 7 zeigt ein solches Spannsystem, das einen Spannuntersatz 42 und einen Spannoberteil aufweist. Der Spannuntersatz 42 umfasst vier Spannfutter 1a-1d, während der Spannoberteil einen Werkstückträger 40 mit vier daran angeordneten Spannelemente 2a-2d umfasst. Das jeweilige Spannfutter ist um 90° gegenüber seinen beiden benachbarten Spannfuttern versetzt auf einem schematisch angedeuteten Maschinentisch 43 einer Bearbeitungsmaschine (nicht ersichtlich) angeordnet, während die vier Spannelemente 2a-2d korrespondierend zu den Spannfuttern 1a-1d auf der Unterseite des Werkstückträgers 40 angeordnet sind. Das Spannsystem umfasst im vorliegenden Beispiel zudem vier Vorzentriereinrichtungen, bestehend aus vier auf dem Maschinentisch 43 angeordneten Zentrierzapfen 45 und vier am Werkstückträger 40 angeordneten Zentrierhülsen 46. Die Vorzentriereinrichtungen dienen dazu, dass die Spannelemente 2a-2d des Werkstückträgers 40 beim Heranführen an den Spannuntersatz 42 vergleichsweise einfach und schnell auf die vier Spannfutter 1a-1d ausgerichtet werden können. Dadurch kann verhindert werden, dass die Spannelemente 2a-2d die Spannfutter 1a-1d beschädigen, wenn diese nämlich beim Absenken des Werkstückträgers 40 nicht genügend genau auf das jeweilige Spannfutter 1a-1d ausgerichtet sind. Hierbei ist zu berücksichtigen, dass der Werkstückträger 40, der durchaus ein Gewicht von mehreren hundert bis zu mehreren tausend Kilogramm aufweisen kann, normalerweise mittels eines Krans o.ä. bewegt und auf den Spannuntersatz 42 aufgesetzt wird. Der Werkstückträger 40 alleine weist üblicherweise ein Gewicht zumindest ca. 200-300 Kilogramm auf und kann ein Gewicht bis zu mehreren tausend Kilogramm aufnehmen. Bei ungenügender Ausrichtung des Werkstückträgers 40 gegenüber dem Spannuntersatz 42 kommen die Zentrierzapfen 45 auf der Unterseite des Werkstückträgers 40 zur Anlage und verhindern dessen weiteres Absenken und damit eine allfällige Beschädigung der Spannfutter 1a-1d.

Im dem Beispiel gemäss Fig. 7 sind alle vier Spannfutter 1a-1d mit einer Zentrierscheibe 9a-9d und alle vier Spannelemente 2a-2d mit Zentrierflächen zum Ausrichten an der jeweiligen Zentrierscheibe 9a-9d versehen. Obwohl dadurch grundsätzlich eine mechanische Überbestimmung in der X-Y-Ebene besteht, kann diese durch die federelastische Nachgiebigkeit der Zentrierscheiben weitestgehend ausgeglichen werden. Eine solche Gestaltung eignet sich insbesondere für kleine bis mittelgrosse Spannsysteme.

Fig. 8 zeigt ein Ausführungsbeispiel eines Spannuntersatzes 42a, welcher sich für grosse bis sehr grosse Spannsysteme eignet. Der Spannuntersatz 42a ist dazu mit insgesamt sechs Spannfuttern 1e-1k versehen. Von den sechs Spannfuttern 1e-1k fluchten einerseits die beiden mittleren Spannfutter 1g, 1k miteinander. Andererseits fluchten auch die beiden oberen äusseren Spannfutter 1f, 1h miteinander. Die beiden unteren äusseren Spannfutter 1e, 1i fluchten mit keinem der anderen Spannfutter 1f, 1g, 1h, 1k.

Wenn jeweils von miteinander fluchten die Rede ist, so ist darunter im vorliegenden Zusammenhang zu verstehen, dass die Längsmittelachsen der betreffenden Spannfutter 1g, 1k; 1f, 1h auf einer Linie -Achse- A2 bzw. A1 liegen.

In diesem Beispiel sind nicht alle Spannfutter mit einer Zentrierscheibe versehen sondern nur die beiden mittleren 1g, 1k, welche die Y-Richtung definieren, und die beiden äusseren hinteren 1f, 1h, welche die X-Richtung definieren. Die beiden äusseren unteren Spannfutter 1e, 1i besitzen keine Zentrierscheibe; sie dienen somit nur dem Festspannen eines korrespondieren an der Palette angeordneten Spannelements. Der Schnittpunkt der durch die mit einer Zentrierscheibe versehenen Spannfutter 1f, 1h; 1g, 1k verlaufenden Achsen A1, A2 bildet dabei den Spannsystem Nullpunkt N.

Es versteht sich, dass zumindest einzelne der Spannfutter zumindest soweit wie möglich voneinander entfernt angeordnet werden, so dass auch die korrespondierend an dem jeweiligen Werkstückträger angebrachten Spannelemente möglichst weit aussen an dem Werkstückträger angeordnet werden können.

Durch das Weglassen der Zentrierscheiben in den beiden äusseren unteren Spannfuttern 1e, 1i soll einerseits eine mechanische Überbestimmung vermieden werden. Andererseits soll ermöglich werden, dass damit grosse bis sehr grosse Werkstückträger festgespannt werden können, zumal, wie eingangs erwähnt, mit der Grösse des jeweiligen Werkstückträgers auch dessen absolute Länge, beispielsweise bedingt durch thermische Einwirkungen, variieren kann. Durch die Ausbildung und Anordnung der Spanneinrichtungen wirken sich solche Längenänderungen in Bezug auf ein wiederholbar genaues Festspannen des Werkstückträgers nicht nennenswert negativ aus. Die beiden Spannorgane 20 eines Spannfutters durch den jeweiligen Kolben unabhängig voneinander bewegt werden, muss das jeweilige Spannelement in Querrichtung nicht exakt mittig in das jeweilige Spannfutter eingesetzt werden. Dieser Vorteil kommt insbesondere bei den beiden Spannfutter 1e, 1i zum Tragen, die keine Zentrierscheibe besitzen. Dadurch lassen sich Längenänderungen des Werkstückträgers kompensieren, welche sich vor allem durch thermische Ausdehnungen ergeben.

Ein solcher Spannuntersatz 42a eignet sich auch zum Festspannen von Werkstückträgern mit vier Spannelementen. Dabei können sowohl Werkstückträger eingesetzt werden, deren Spannelemente mit den beiden mittleren Spannfuttern 1g, 1k und entweder den rechten 1e, 1f oder linken Spannfuttern 1h, 1i zusammenwirken.

Ein derart gestaltetes Spannsystem ist einerseits relativ unempfindlich in Bezug auf eine genaue Positionierung der Spannelemente am Werkstückträger, wie auch in Bezug auf Herstellungstoleranzen der Spannelemente wie auch der Zentrierelemente, da gewisse Ungenauigkeiten einerseits von den Federscheiben ausgeglichen werden können und andererseits die beschriebene Anordnung der Spannfutter auch dazu beiträgt, dass beispielsweise temperaturbedingte Längenänderungen des Werkstückträgers ausgeglichen bzw. aufgenommen werden können.

Alternativ zu dem Ausführungsbeispiel gemäss Fig. 8 könnten auch sämtliche Spannfutter mit Zentrierscheiben versehen werden. In diesem Fall könnten bei einigen Spannelementen vorzugsweise die Zentrierflächen 35 weggelassen werden, so dass die entsprechenden Spannelemente beim Festspannen am Spannfutter nicht an den Zentrierscheiben zur Anlage kommen, sondern nur dem Festspannen im Spannfutter dienen. Natürlich ist auch eine Kombination von beidem möglich, indem bei einem oder mehreren Spannfuttern die Zentrierscheiben weggelassen werden und bei einem oder mehreren Spannelementen die Zentrierflächen.

Vorzugsweise ist der jeweilige Spannuntersatz 42, 42a zusätzlich noch mit Elementen zur Detektierung des Vorhandenseins eines Werkstückträgers versehen. Je nach Ausbildung, Anordnung und Wirkungsweise kann über solche Elemente auch ein korrektes Festspannen des Werkstückträgers erkannt werden. Als Elemente können beispielsweise handelsübliche Näherungsschalter zum Einsatz kommen, beispielsweise auf mechanischer-, induktiver-, kapazitiver-, optischer- oder magnetischer Basis.

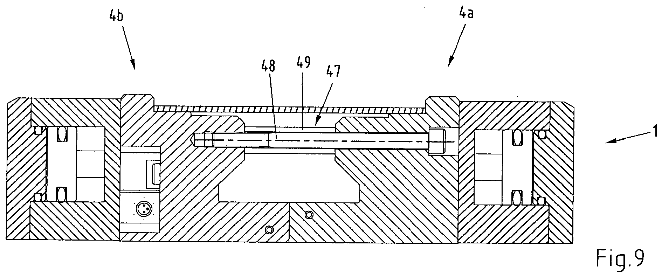

Die Figur 9 zeigt ein alternatives und besonders bevorzugtes Ausführungsbeispiel des Spannfutters 1 in einem Schnitt. Um das Spannfutter 1 insgesamt stabiler und steifer auszubilden sind die beiden Spannfutterhälften 4a, 4b im oberen Bereich mittels zwei Verstrebungen 47 miteinander verbunden, wobei aus dieser Darstellung nur die eine der beiden Verstrebungen ersichtlich ist. Jede Verstrebung besteht aus einer Distanzhülse 48 und einer Spannschraube 49. Das Spannfutter 1 ist in beiden Endbereichen mittels je einer solchen Verstrebung 47 verstärkt. Dabei ist der lichte Abstand zwischen den beiden Verstrebungen grösser als die Länge eines Spannelements. Vorzugsweise ist der lichte Abstand zwischen den beiden Verstrebungen in etwa gleich gross wie die Länge der in die Zentrierscheibe 9a eingelassenen Zentrieröffnung 11 (Fig. 1), so dass die vorgängig angeführten Vorteile, namentlich dass das Spannelement in Längsrichtung, d.h. in Richtung der Längsachse des Spannelements bzw. der Zentrieröffnung nicht exakt mittig eingeführt werden muss, sondern durchaus um einige Millimeter versetzt sein kann, erhalten bleiben. Die beiden Verstrebungen sind zudem so ausgebildet und angebracht, dass die identische Gestaltung der beiden Spannfutterhälften 4a, 4b erhalten bleibt.

Es versteht sich, dass die vorgängigen Ausführungsbeispiele nicht als abschliessend oder umfassend zu betrachten sind. So könnten im Rahmen der Erfindung auch Spannsysteme realisiert werden, die mit mehreren auf einer Kreislinie verteilt angeordneten Spannfuttern versehen sind. Beispielsweise könnten drei, vier fünf oder sechs Spannfutter entlang einer Kreislinie verteilt auf einem Spannuntersatz angeordnet werden.

Die Vorteile von erfindungsgemäss gestalteten Spannvorrichtungen bzw. Spannsystemen lassen sich wie folgt zusammenfassen:
- Es können sehr hohe Spann- und Haltekräfte generiert werden;
- Das einzelne Spannfutter kann sehr hohe Querkräfte aufnehmen;
- Die Spannfutter zusammen mit den Spannelementen eignen sich als Module zum Aufbau von unterschiedlich grossen und unterschiedlich gestalteten Spannsystemen;
- Mit den Modulen können sehr grosse Spannsysteme für sehr grosse und schwere Werkstückträger realisiert werden;
- Auch sehr grosse Werkstückträger können mit einer Wiederholgenauigkeit im Bereich von ca. 10 bis 20 Mikrometern auf dem Spannuntersatz festgespannt werden;
- Die Spannelemente können einfach und schnell und an unterschiedlichst gestalteten Werkstückträgern angebracht werden;
- Durch federelastisch nachgiebige Zentrierscheiben kann eine allfällige Überbestimmtheit weitgehend vermieden bzw. ausgeglichen werden;
- Die Spannfutter besitzen eine geringe Aufbauhöhe;
- Die Spannfutter sind einfach aufgebaut, zuverlässig in der Anwendung und günstig in der Herstellung;
- Ein Spannfutter besteht aus zwei baugleichen Hälften;
- Das jeweilige Spannelement wird im Spannfutter mechanisch mittels Druckfedern sicher verriegelt;
- Die Druckfedern stellen sicher, dass die Spannkraft auch im energiefreien Zustand erhalten bleibt;
- Es ist eine pneumatische Serienschaltung der Spannfutter möglich;
- Die Spannfutter weisen ein schmutztolerantes Design auf;
- Die Spannfutter sind einfach zu reinigen;
- Das Spannsystem ist unempfindlich in Bezug auf eine genaue Positionierung der Spannelemente beim Anbringen am Werkstückträger;
- Das Spannsystem ist unempfindlich in Bezug auf Herstellungstoleranzen der Spannelemente;
- Das Spannsystem ist unempfindlich in Bezug auf Herstellungstoleranzen der Zentrierelemente;
- Das Spannsystem reagiert unempfindlich in Bezug auf temperaturbedingte Längenänderungen des Werkstückträgers;

## Patentansprüche

1. Spanneinrichtung mit einem Spannfutter (1) und einem daran festspannbaren Spannelement (2), wobei das Spannfutter (1) eine Aufnahmeöffnung (7) für das Spannelement (2) und am Spannelement angreifende Spannorgane (20) zum Festspannen des Spannelements (2) in der Aufnahmeöffnung (7) aufweist, **dadurch gekennzeichnet, dass** das Spannelement (2) länglich ausgebildet ist und die zur Aufnahme des Spannelements (2) im Spannfutter (1) vorgesehene Aufnahmeöffnung (7) länglich, schlitzförmig ausgebildet ist, und dass im Einführbereich der Aufnahmeöffnung (7) zumindest ein federelastisch nachgiebiges Zentrierelement (9) am Spannfutter (1) angeordnet ist, welches dazu ausgebildet ist das Spannelement (2) beim Einführen in die Aufnahmeöffnung (7) quer zur Längsachse (L) der Aufnahmeöffnung (7) auszurichten.

2. Spanneinrichtung nach Anspruch 1, **dadurch gekennzeichnet, dass** das zumindest eine Zentrierelement (9) mit einer länglichen Zentrieröffnung (11) versehen ist, wobei sowohl die Aufnahmeöffnung (7) des Spannfutters (1) wie auch die Zentrieröffnung (11) länger sind als das Spannelement (2).

3. Spanneinrichtung nach Anspruch 1 oder 2, **dadurch gekennzeichnet, dass** die Spannorgane (20) als längliche Schieber dazu ausgebildet sind an einer jeweiligen Spannfläche (33) des Spannelements (2) anzugreifen.

4. Spanneinrichtung nach einem der vorhergehenden Ansprüche, **dadurch gekennzeichnet, dass** das Spannfutter (1) mit zwei der genannten Spannorgane (20) versehen ist, welche parallel angeordnet sind.

5. Spanneinrichtung nach Anspruch 3 oder 4, **dadurch gekennzeichnet, dass** das jeweilige Spannorgan (20) länger ist als das Spannelement (2).

6. Spanneinrichtung nach einem der vorhergehenden Ansprüche, **dadurch gekennzeichnet, dass** das Zentrierelement (9) eine einstückig ausgebildete Zentrierscheibe (9a) aus rostbeständigem Stahl ist, wobei die Zentrierscheibe (9a) im Einführbereich der Aufnahmeöffnung (7) des Spannfutters (1) angeordnet ist, und wobei die Zentrieröffnung (11) in die Zentrierscheibe (9a) eingelassen ist.

7. Spanneinrichtung nach einem der vorhergehenden Ansprüche, **dadurch gekennzeichnet, dass** das Spannelement (2) entlang seiner beiden Längsseiten mit je einer Spannfläche (33) versehen ist, an der sich das jeweilige Spannorgan (20) zum Einziehen und Festspannen des Spannelements (2) kraft- und/oder formschlüssig anlegt.

8. Spanneinrichtung nach einem der vorhergehenden Ansprüche, **dadurch gekennzeichnet, dass** das Spannelement (2) entlang seiner beiden Längsseiten mit je einer konisch zulaufenden Zentrierfläche (35) und je einer Spannfläche (33) versehen ist, wobei die Spannflächen (33) in Einschubrichtung gesehen vor den Zentrierflächen (35) angeordnet sind, und wobei die Spannorgane (20) als längliche Schieber ausgebildet sind, welche an der jeweiligen Spannfläche (33) des Spannelements (2) anzugreifen bestimmt sind.

9. Spanneinrichtung nach einem der vorhergehenden Ansprüche, **dadurch gekennzeichnet, dass** das Spannfutter (1) pro Spannorgan (20) zumindest einen linear verschiebbaren, in einem Kolbengehäuse (8a, 8b) aufgenommenen Betätigungskolben (24) aufweist, der mechanisch mit dem jeweiligen Spannorgan (20) verbunden ist.

10. Spanneinrichtung nach Anspruch 9, **dadurch gekennzeichnet, dass** der jeweilige Betätigungskolben (24) und/oder das jeweilige Spannorgan (20) mittels Druckfedern (25, 38) in Richtung der Aufnahmeöffnung (7) belastet ist/sind, und dass der jeweilige Betätigungskolben (24) pneumatisch entgegen der Kraft der Federn (25, 38) verschiebbar ist.

11. Spanneinrichtung nach einem der vorhergehenden Ansprüche, **dadurch gekennzeichnet, dass** das Spannelement (2) auf beiden Längsseiten mit je einer konisch zulaufenden Zentrierfläche (35) versehen ist, wobei die jeweilige Zentrierfläche (35) insbesondere zweistufig ausgebildet ist.

12. Spanneinrichtung nach einem der vorhergehenden Ansprüche, **dadurch gekennzeichnet, dass** die Aufnahmeöffnung (7) durchgehend, sich über die gesamte Länge des Spannfutters (1) erstreckend ist.

13. Spanneinrichtung nach einem der vorhergehenden Ansprüche, **dadurch gekennzeichnet, dass** das Spannfutter (1) auf der Oberseite mit erhöhten Auflageflächen (15a, 15b) versehen ist, welche sich auf beiden Seiten entlang der Aufnahmeöffnung (7) erstrecken.

14. Spannsystem mit einem Spannuntersatz, einem Werkstückträger und zumindest zwei, insbesondere zumindest 3 nach einem der Ansprüche 1 bis 13 ausgebildeten Spanneinrichtungen, welche zumindest zwei auf dem Spannuntersatz angeordnete Spannfutter (1a-1d) und eine korrespondierende Anzahl von an dem Werkstückträger angeordneten Spannelementen (2a-2d) aufweisen, wobei zumindest zwei der Spannfutter (1a-1d) unter einem Winkel von insbesondere 60°, 72°, 90° oder 120° zueinander versetzt angeordnet sind und an dem Werkstückträger (40) korrespondierend dazu die Spannelemente (2a-2d) angeordnet sind.

15. Spannsystem nach Anspruch 14, wobei auf dem Spannuntersatz (42) vier der Spannfutter (1a-1d) um jeweils 90° zueinander versetzt angeordnet sind, und wobei am Werkstückträger (40) vier der Spannelemente (2a-2d) zum Festspannen des Werkstückträgers (40) am Spannuntersatz (42) angeordnet sind, wobei zwei der Spannfutter (1b, 1d) im Einführbereich der Aufnahmeöffnung mit je einer Zentrierscheibe (9b, 9d) zum Ausrichten des Werkstückträgers (40) in einer ersten Richtung versehen sind und die beiden anderen der Spannfutter (1a, 1c) im Einführbereich der Aufnahmeöffnung mit je einer Zentrierscheibe (9a, 9c) zum Ausrichten des Werkstückträgers (40) in einer quer zur ersten Richtung verlaufenden zweiten Richtung versehen sind.

16. Spannsystem nach Anspruch 14, **dadurch gekennzeichnet, dass** auf dem Spannuntersatz (42, 42a) zumindest vier der Spannfutter (1a-1d; 1e-1k) angeordnet sind wobei zumindest zwei der Spannfutter (1a, 1c; 1f, 1h) in einer Richtung miteinander fluchten und wobei zumindest ein weiteres der Spannfutter (1b, 1d; 1g, 1k; 1e, 1i) um 90° zu den beiden miteinander fluchtenden Spannfuttern (1a, 1c; 1f, 1h) auf dem Spannuntersatz (42, 42a) angeordnet ist.

17. Spannsystem nach Anspruch 14, **dadurch gekennzeichnet, dass** auf dem Spannuntersatz zumindest vier der Spannfutter angeordnet sind, wobei zumindest zwei der Spannfutter (1a, 1c; 1f, 1h) in einer ersten Richtung miteinander fluchten und zumindest zwei weitere der Spannfutter (1b, 1d; 1g, 1k) in einer zweiten Richtung miteinander fluchten, wobei die beiden in der ersten Richtung miteinander fluchtenden Spannfutter (1a, 1c; 1f, 1h) mit je einer Zentrierscheibe (9a, 9c; 9f, 9h) zum Ausrichten des jeweiligen Spannelements in einer ersten Richtung versehen sind und wobei die beiden in der zweiten Richtung miteinander fluchtenden Spannfutter (1b, 1d; 1g, 1k) mit je einer Zentrierscheibe (9b, 9d; 9g, 9k) zum Ausrichten des Spannelements in einer zu der ersten Richtung um 90° versetzten zweiten Richtung versehen sind.

18. Spannsystem nach Anspruch 14, **dadurch gekennzeichnet, dass** auf dem Spannuntersatz drei, vier, fünf oder sechs der Spannfutter entlang einer Kreislinie verteilt angeordnet sind.

## Claims

1. Clamping device, with a clamping chuck (1) and a clamping element (2) which can be secured to it, wherein the clamping chuck (1) comprises a receiving opening (7) for the clamping element (2) and clamping bodies (20) which engage at the clamping element in order to secure the clamping element (2) in the receiving opening (7), **characterized in that** the clamping element (2) is configured as longitudinal, and the receiving opening (7) provided for receiving the clamping element (2) in the clamping chuck (1) is configured in the form of a slot, and that at least one spring-elastic yielding centring element (9) is arranged at the clamping chuck (1) in the inlet region of the receiving opening (7), which is configured such as to align the clamping element (2) during the introduction into the receiving opening (7) transversely to the longitudinal axis (L) of the receiving opening (7).

2. Clamping device according to claim 1, **characterized in that** the at least one centring element (9) is provided with a longitudinal centring opening (11), wherein both the receiving opening (7) of the clamping chuck (1) as well as the centring opening (11) are longer than the clamping element (2).

3. Clamping device according to claim 1 or 2, **characterized in that** the clamping bodies (20) are configured as longitudinal thrust elements, such as to engage at the respective clamping surface (33) of the clamping element (2).

4. Clamping device according to any one of the preceding claims, **characterized in that** the clamping chuck (1) is provided with two of the clamping bodies (20) referred to, which are arranged in parallel.

5. Clamping device according to claim 3 or 4, **characterized in that** the respective clamping body (20) is longer than the clamping element (2).

6. Clamping device according to any one of the preceding claims, **characterized in that** the centring element (9) is a centring disk (9a) of rust-resistant steel, configured as a single piece, wherein the centring disk (9a) is arranged in the inlet region of the receiving opening (7) of the clamping chuck (1), and wherein the centring opening (11) is let into the centring disk (9a).

7. Clamping device according to any one of the preceding claims, **characterized in that** the clamping element (2) is provided in each case, along both of its sides, with a clamping surface (33), with which the respective clamping body (20) is in non-positive fit or positive fit contact for the drawing in and securing of the clamping element (2).

8. Clamping device according to any one of the preceding claims, **characterized in that** the clamping element (2) is provided along both its longitudinal sides in each case with a conically tapering centring surface (35), and in each case with a clamping surface (33), wherein the clamping surfaces (33), seen in the inlet direction, are arranged before the centring surfaces (35), and wherein the clamping bodies (20) are configured as longitudinal thrust elements, which are intended to engage at the respective clamping surface (33) of the clamping element (2).

9. Clamping device according to any one of the preceding claims, **characterized in that** the clamping chuck (1) comprises, per clamping body (20), at least one linear displaceable actuating piston (24), accommodated in a piston housing (8a, 8b), which is mechanically connected to the respective clamping body (20).

10. Clamping device according to claim 9, **characterized in that** the respective actuating piston (24) and/or the respective clamping body (20) is/are subjected to loading by means of pressure springs (25, 38) in the direction of the receiving opening (7), and that the respective actuating piston (24) can be pneumatically displaced against the force of the springs (25, 38).

11. Clamping device according to any one of the preceding claims, **characterized in that** the clamping element (2) is provided on both longitudinal sides, in each case, with a comically tapering centring surface (35), wherein the respective centring surface (35) is configured in particular as being of two stages.

12. Clamping device according to any one of the preceding claims, **characterized in that** the receiving opening (7) extends continuously over the entire length of the clamping chuck (1).

13. Clamping device according to any one of the preceding claims, **characterized in that** the clamping chuck (1) is provided on the upper side with raised contact surfaces (15a, 15b), which extend on both sides along the receiving opening (7).

14. Clamping system with a clamping subassembly, a workpiece carrier, and at least two, and in particular at least three, claming devices configured in accordance with any one of claims 1 to 13, which comprise at least two clamping chucks (1a-1d), arranged on the clamping subassembly, and a corresponding number of clamping elements (2a-2d) arranged on the workpiece carrier, wherein at least two of the clamping chucks (1a-1d) are arranged offset in relation to one another in particular at an angle of 60°, 72°, 90° or 120°, and the clamping elements (2a-2d) corresponding to these are arranged on workpiece carrier (40).

15. Clamping system according to claim 14, wherein four of the clamping chucks (1a-1d) are arranged on the clamping subassembly (42) offset to one another in each case by 90°, and wherein four of the clamping elements (2a-2d) are arranged on the clamping subassembly (42) in order to secure the workpiece carrier (40), wherein two of the clamping chucks (1b, 1d) are provided in the inlet region of the receiving opening, in each case with a centring disk (9b, 9d), for aligning the workpiece carrier (40) in a first direction, and the two other clamping chucks (1a, 1c) are provided in the inlet region of the receiving opening in each case with a centring disk (9a, 9c) for aligning the workpiece carrier (40) in a second direction running transverse to the first direction.

16. Clamping system according to claim 14, **characterized in that** at least four of the clamping chucks (1a-1d; 1e-1k) are arranged on the clamping subassembly (42, 42a), wherein at least two of the clamping chucks (1a, 1c; 1f, 1h) are aligned with one another in one direction, and wherein at least one further of the clamping chucks (1b, 1d; 1g, 1k; 1e, 1i) is arranged offset by 90° to the two clamping chucks (1a, 1c; 1f, 1h) aligned on the clamping subassembly (42, 42a).

17. Clamping system according to claim 14, **characterized in that** at least four of the clamping chucks are arranged on clamping subassembly, wherein at least two of the clamping chucks (1a, 1c; 1f, 1h) are aligned with one another in a first direction, and at least two further of the clamping chucks (1b, 1d; 1g, 1k) are aligned with one another in a second direction, wherein the two clamping chucks (1a, 1c; 1f, 1h) aligned in the first direction are each provided with a centring disk (9a, 9c; 9f, 9h) for aligning the respective clamping element in a first direction, and wherein the two clamping chucks (1b, 1d; 1g, 1k) aligned with one another in the second direction are each provided with a centring disk (9b, 9d; 9g, 9k) for aligning the clamping element in a second direction, offset by 90° to the first direction.

18. Clamping system according to claim 14, **characterized in that** three, four, five, or six of the clamping chucks are arranged on the clamping subassembly distributed along a circumference of a circle.

## Revendications

1. Dispositif de serrage avec un mandrin (1) et un élément de serrage (2) pouvant être serré sur celui-ci, le mandrin présentant une ouverture de réception (7) pour l'élément de serrage (2) et des organes de serrage (20) venant en prise avec l'élément de serrage pour le serrage de l'élément de serrage (2) dans l'ouverture de réception (7), **caractérisé en ce que** l'élément de serrage (2) est conçu allongé et l'ouverture de réception prévue pour la réception de l'élément de serrage (2) dans le mandrin (1) est conçue allongée, en forme de fente, et au moins un élément de centrage déformable élastiquement (9) est disposé sur le mandrin (1) dans la zone d'introduction de l'ouverture de réception (7), élément de centrage, qui est conçu pour orienter l'élément de serrage (2) transversalement à l'axe longitudinal (L) de l'ouverture de réception (7) lors de l'introduction dans l'ouverture de réception (7).

2. Dispositif de serrage suivant la revendication 1, **caractérisé en ce que** l'au moins un élément de centrage (9) est pourvu d'une ouverture de centrage (11) allongée, aussi bien l'ouverture de réception (7) du mandrin (1) que l'ouverture de centrage (11) étant plus longues que l'élément de serrage (2).

3. Dispositif de serrage suivant la revendication 1, **caractérisé en ce que** les organes de serrage (20) sous forme de coulisseaux allongés sont conçus pour venir en prise avec une surface de serrage (33) respective de l'élément de serrage (2).

4. Dispositif de serrage suivant une des revendications précédentes, **caractérisé en ce que** le mandrin (1) est pourvu de deux des organes de serrage mentionnés (20), lesquels sont disposés parallèles.

5. Dispositif de serrage suivant la revendication 3 ou 4, **caractérisé en ce que** l'organe de serrage respectif (20) est plus long que l'élément de serrage (2).

6. Dispositif de serrage suivant une des revendications précédentes, **caractérisé en ce que** l'élément de centrage (9) est un disque de centrage (9a) en acier inoxydable, le disque de centrage (9a) étant disposé dans la zone d'introduction de l'ouverture de réception (7) du mandrin (1), et l'ouverture de centrage (11) étant insérée dans le disque de centrage (9a).

7. Dispositif de serrage suivant une des revendications précédentes, **caractérisé en ce que** l'élément de serrage (2) est pourvu le long de ses deux côtés longitudinaux d'une surface de serrage (33) respective, contre laquelle l'organe de serrage respectif (20) vient se placer par adhérence et/ou complémentarité pour l'insertion et le serrage de l'élément de serrage (2).

8. Dispositif de serrage suivant une des revendications précédentes, **caractérisé en ce que** l'élément de serrage (2) est pourvu d'une surface de centrage effilée (35) et d'une surface de serrage (33) respectivement le long de ses deux côtés longitudinales, les surfaces de serrage (33) étant disposées devant les surfaces de centrage (35), vu dans le sens d'introduction, et les organes de serrage (20) étant conçus comme coulisseaux allongés qui sont destinés à venir en prise avec la surface de serrage (33) respective de l'élément de serrage (2).

9. Dispositif de serrage suivant une des revendications précédentes, **caractérisé en ce que** le mandrin (1) présente par organe de serrage (20) au moins un piston d'actionnement (24) déplaçable linéairement qui est reçu dans un logement de piston (8a, 8b) et qui est relié mécaniquement à l'organe de serrage (20) respectif.

10. Dispositif de serrage suivant une des revendications précédentes, **caractérisé en ce que** le piston d'actionnement (24) respectif et/ou l'organe de serrage (20) respectif est/sont chargé/s au moyen de ressorts de pression (25, 38) dans le sens de l'ouverture de réception (7) et **en ce que** le piston d'actionnement respectif (24) est déplaçable pneumatiquement à l'encontre de la force des ressorts (25, 38).

11. Dispositif de serrage suivant une des revendications précédentes, **caractérisé en ce que** l'élément de serrage (2) est pourvu d'une surface de centrage (35) effilée sur ses deux côtés longitudinaux, la surface de centrage respective (35) étant en particulier conçue à deux étages.

12. Dispositif de serrage suivant une des revendications précédentes, **caractérisé en ce que** l'ouverture de réception (7) s'étend en continu sur toute la longueur du mandrin (1).

13. Dispositif de serrage suivant une des revendications précédentes, **caractérisé en ce que** sur la face supérieure, le mandrin (1) est pourvu de surfaces d'appui surélevées (15a, 15b) qui s'étendent sur les deux côtés le long de l'ouverture de réception (7).

14. Système de serrage avec un support de serrage, dans lequel un porte-pièce et au moins deux, en particulier trois, dispositifs de serrage conçus suivant une des revendications 1 à 13, lesquels présentent au moins deux mandrins (1a - 1d) disposés sur le support de serrage et un nombre correspondant d'éléments de serrage disposés sur le porte-pièce (2a-2d), deux au moins des mandrins (1a-1d) étant disposés de manière décalée les uns par rapport aux autres sous un angle de 60°, 72°, 90° ou 120° en particulier et les éléments de serrage (2a-2d) étant disposés de manière correspondante sur le porte-pièce (40).

15. Système de serrage suivant la revendication 14, dans lequel quatre des mandrins (1a-1d) étant disposés de manière décalée respectivement de 90° les uns par rapport aux autres sur le support de serrage (42) et quatre des éléments de serrage (2a-2d) étant disposés sur le porte-pièce (40) pour serrer celui-ci sur le support de serrage (42), deux mandrins (1b, 1d) étant pourvus d'un disque de centrage (9b, 9d) dans la zone d'introduction de l'ouverture de réception pour orienter le porte-pièce (40) dans une première direction et les deux autres des mandrins (1a, 1c) étant pourvus respectivement d'un disque de centrage (9a, 9c) dans la zone d'introduction de l'ouverture de réception pour orienter le porte-pièce (40) dans une deuxième direction transversale à la première direction.

16. Système de serrage suivant la revendication 14, **caractérisé en ce qu'**au moins quatre des mandrins (1a-1d, 1e-1k) sont disposés sur le support de serrage (42, 42a), au moins deux des mandrins (1a, 1c, 1f, 1h) étant alignés entre eux dans une direction et au moins un autre des mandrins (1b, 1d, 1g, 1k, 1^{e}, 1i) étant disposé sur le support de serrage (42, 42a) sous un angle de 90° par rapport aux deux mandrins alignés (1a, 1c, 1f, 1h)

17. Système de serrage suivant la revendication 14, **caractérisé en ce qu'**au moins quatre des mandrins sont disposés sur le support de serrage, au moins deux des mandrins (1a, 1c, 1f, 1h) étant alignés entre eux dans une première direction et au moins deux autres mandrins (1b, 1d, 1g, 1k) étant alignés entre eux dans une deuxième direction, les deux mandrins (1a, 1c, 1f, 1h) alignés entre eux dans la première direction étant pourvus respectivement d'un disque de centrage (9a, 9c, 9f, 9h) pour orienter l'élément de serrage respectif dans une première direction et les deux mandrins (1b, 1d, 1g, 1k) alignés entre eux dans la deuxième direction étant pourvus respectivement d'un disque de centrage (9b, 9d, 9g, 9k) pour orienter l'élément de serrage dans une deuxième direction décalée de 90° par rapport à la première direction.

18. Système de serrage suivant la revendication 14, **caractérisé en ce que** trois, quatre, cinq ou six des mandrins sont disposés sur le support de serrage de manière répartie le long d'une ligne circulaire.
